# EUROPÄISCHE PATENTSCHRIFT

(11) **EP 1 516 715 B1**
(45) Veröffentlichungstag und Bekanntmachung des Hinweises auf die Patenterteilung: **30.11.2005**
(21) Anmeldenummer: 03021018.1
(22) Anmeldetag: 17.09.2003
(51) Int. Cl.: B29D 31/515, A43B 17/14, A61F 5/14

(54) **Verfahren zur Herstellung einer orthopädischen Schuheinlage und nach dem Verfahren hergestellte Schuheinlage**
Manufacturing method of an orthotic and orthotic made by such a method
Procédé de fabrication d'une orthèse et orthèse obtenue par un tel procédé

(43) Veröffentlichungstag der Anmeldung: 23.03.2005
(73) Patentinhaber: Spannrit Schuhkomponenten GmbH, 63801 Kleinostheim (DE)
(72) Erfinder: Katzer, Roland, 63801 Kleinostheim (DE)
(74) Vertreter: Leske, Thomas

(56) Entgegenhaltungen:
- EP-A- 0 274 179
- EP-A- 0 893 112
- DE-U- 9 201 704
- DE-U- 29 504 890
- GB-A- 2 010 068

## Beschreibung

Die Erfindung betrifft ein Verfahren zur Herstellung einer orthopädischen Schuheinlage sowie eine nach diesem Verfahren hergestellte Schuheinlage. Orthopädische und fußbettartig geformte Einlegesohlen sind allgemein gebräuchlich. Sie werden aus verschiedensten Materialien, u.a. aus thermoplastischem Kunststoff hergestellt. Sie sollen im mittleren Bereich eine ausreichend steife und formbeständige, dem Fuß angepasste Stütze bilden sowie zum Rand hin flexibel sein und dort mit möglichst geringer Materialdicke quasi auf Null auslaufen.

Derartige Schuheinlagen werden gemäß DE 44 37 282 A1 in der Weise hergestellt, dass Ober- und Unter-Deckteile zusammen mit einem den Stützkern bildenden Formteil klebstofffrei vorgeheizt werden. Nach dem Vorheizen werden die Teile zusammengefügt, wobei das Unterteil vorzugsweise mit Klebstoff versehen wird. Danach werden die Teile auf einen Leisten oder eine Gipsform gelegt und unter einer Vakuumpresse unter entsprechender Druckaufbringung verformt. Nach dem Abkühlen müssen zuletzt noch Randpartien der Schuheinlage beschliffen werden, um ihnen die endgültige Form und Materialstärke zu verleihen.

Nach einer weiteren Methode (EP 1 090 563 A2) bestehen Oberdeckschicht, Unterdeckschicht und Stützkern jeweils aus thermoplastischem Material mit annähernd gleichem Schmelzpunkt. Diese drei Bestandteile werden durch Formpressen zur Schuheinlage geformt wobei sie zugleich durch Anschmelzen der sich berührenden Oberflächen dauerhaft miteinander verbunden werden. Zusätzlich können diese Einlegesohlen fuß- und/oder sohlenseitig mit einem Bezug aus Leder, Kunstleder, Stoff oder Kunststoff versehen werden, der für die Oberseite hautfreundlich sein soll und bspw. mittels Kleber auf die Einlegesohle aufgebracht wird.

Aus der DE 92 01 704 U1 ist ferner eine Einlegesohle bekannt, die aus zwei fest miteinander verbundenen Schichten unterschiedlicher Härte, nämlich aus einer sohlenseitigen härteren Schicht mit einer fußseitigen weichen Auflage besteht. Die Herstellung erfolgt in der Weise, dass zunächst die härtere Schicht in einem ersten Formwerkzeug gespritzt wird. Nach dem Entformen erfolgt ein Umsetzen der erstarrten härteren Schicht in ein zweites Formwerkzeug. Anschließend wird die weichere Schicht im zweiten Formwerkzeug auf die härtere Schicht aufgespritzt. Hierbei ist kein Pressvorgang zur Ausdünnung des Sohlenrandes vorgesehen. Zudem führt dieses Verfahren zu einer gepolsterten Einlegesohle, bei der die weiche Schicht auf der Oberseite angeordnet ist.

Die GB 2 010 068 A beschreibt die Herstellung einer Dämpfungseinlage für Sportschuhe, wie sie typischerweise zum "jogging" verwendet werden. Die Dämpfungseinlage soll bessere stoßdämpfende Eigenschaften als herkömmliche harte Fußgewölbeunterstützungen ausweisen, die für Sport- und Laufschuhe als ungeeignet angesehen werden. Die Dämpfungseinlage unterstützt lediglich das Fersenbein bis hin zum Fußgewölbe und bildet innenseitig eine hochgezogene Seitenwand, die in einen im wesentlichen senkrechten Wandbereich übergeht, der sich bogenförmig um den Fersenbereich herum erstreckt und sich außenseitig bis zur etwa in Fußmitte liegenden Vorderkante der Dämpfungseinlage ausläuft, wobei sie schuhartig die Ferse umschließt. Die Dämpfungseinlage wird in einem Werkzeug aus geschlossenporigem Schaumstoff heißgeformt.

Eine weitere mehrschichtige Einlagesohle beschreibt die EP 0 274 179 A2. Über einer harten Unterschicht wird in einem Formwerkzeug mit Abstand eine Folie gelegt. Der Zwischenraum zwischen Folie und Unterschicht wird mit PUR ausgeschäumt. Damit sich die Ausschäumung im Bereich von der Sohlenmitte bis zum Fersenbereich nicht mit der Unterschicht verbindet, wird eine wiederentfernbare Metallabdeckung zwischengelegt. Das Ergebnis ist eine Schuheinlage mit einer harten Untersohle, die im Schuh mit Nägeln befestigt werden kann, und eine weiche, stoßdämpfende Auflage besitzt, die lediglich im Zehenbereich mit der Untersohle verbunden ist. Im Fersenbereich kann sie dagegen hochgeklappt werden, damit dort die Befestigung im Schuh vorgenommen werden kann.

Mit der Erfindung sollen ein vereinfachtes Herstellverfahren und eine Einlegesohle mit reproduzierbarer Maßhaltigkeit geschaffen werden. Dies wird mit dem Herstellverfahren nach Anspruch 1 bzw. mit der Schuheinlage nach Anspruch 13 erreicht.

Bei dem erfindungsgemäßen Verfahren wird in einem Verfahrensschritt ein thermisch erweichter Kunststofflappen oder eine thermisch erweichte flexible Kunststoffplatte im Randbereich der Einlegesohle mittels einer Press-Spritzgießform gepresst, wobei das verpresste Material teilweise in das Formnest verdrängt wird. Im nachfolgenden Verfahrensschritt wird ein Stützteil aufgebracht, indem die verbliebenen Hohlräume der Form im Spritzgießverfahren mit Kunststoff ausgefüllt werden, der im Vergleich zum Material des Kunststofflappens eine größere Härte besitzt. Damit ergibt sich ein fester Verbund und auch bereits die fertige Schuheinlage.

Die erfindungsgemäße orthopädische Schuheinlage besteht aus einer flexiblen Kunststoffplatte oder einem Kunststofflappen, der in einem Randbereich entlang der Außenkontur der Einlegesohle derart ausgedünnt ist, dass die Materialstärke im Randbereich des Einlegesohle nach außen a annähernd Null ausläuft, und umfasst weiter ein, einen mittleren Bereich der Einlegesohle bildendes Stützteil aus thermoplastischem Kunststoff, das der Kunststoffplatte bzw. dem Kunststofflappen aufgespritzt ist, wobei das aufgespritzte Material im Vergleich zum Material des Kunststofflappens eine größere Härte besitzt.

Vorteilhafte Weiterbildungen ergeben sich aus den jeweiligen abhängigen Ansprüchen und der nachfolgenden detaillierten Beschreibung von Ausfühnmgsbeispielen.

Es zeigen
- Fig. 1: schematisch den Verfahrensablauf nach einem ersten Ausführungsbeispiel;
- Fig. 2: schematisch den Verfahrensablauf nach einem zweiten und dritten Ausführungsbeispiel;
- Fig. 3: eine Einlegesohlenpaar nach der Entformung; und
- Fig. 4: einen Schnitt längs der Linie X-X von Fig. 3.

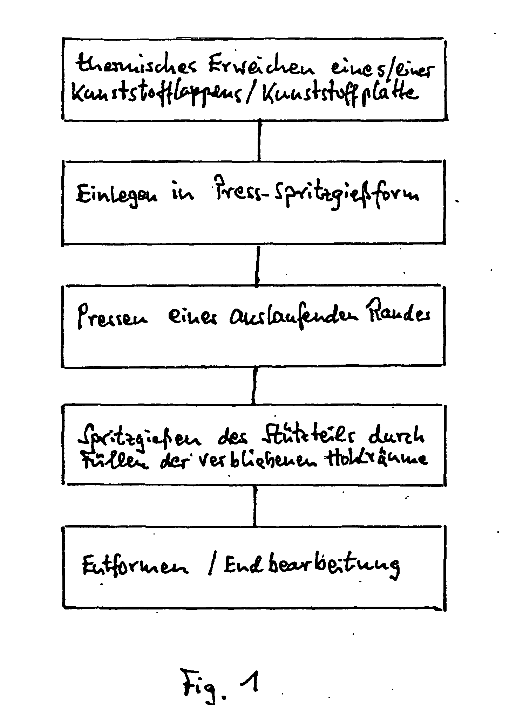

Bei einem Ausführungsbeispiel des erfindungsgemäßen Verfahrens gemäß Figur 1 wird ein mit Gewebe hinterlegter, etwa 1 mm dicker Kunststofflappen, bspw. aus Ethylen-Vinyl-Azetat unter einem Heizstrahler, auf einer Heizplatte oder in einem Heizofen auf eine Temperatur von annähernd 100°C aufgeheizt, bei welcher der thermoplastische Kunststoff zu fließen beginnt. Der auf diese Weise thermisch erweichte Kunststofflappen wird in ein Press-Spritzgießwerkzeug aus üblichen Werkzeugmaterialien beispielsweise aus Aluminium oder Stahl gelegt, welches mindestens ein Formnest, vorzugsweise aber mehrere Formnester für Einlegesohlen-Paare besitzt, wobei jedes Formnest eine der dreidimensionalen Form der Einlegesohlen entsprechende Kavität besitzt. Das Aufheizen des Kunststofflappens kann sowohl in einer eigenen Station als auch im Press-Spritzgießwerkzeug selbst vorgenommen werden. Umlaufend um jedes Einlegesohlen-Formnest ist im Werkzeug ein erhöhter Pressrand ausgebildet, der etwa 2 mm bis 3 mm des Randbereichs der jeweiligen Einlegesohle überdeckt und außenseitig im Werkzeug zumindest auf mehrere mm freigestellt ist. Beim Schließen des Werkzeugs wird durch entsprechenden Schließdruck das thermisch erweichte Material seitlich verdrängt, wobei es zum Teil nach außen in den freigestellten Bereich und zum Teil in das Formnest ausweichen kann, ohne allerdings letzteres vollständig zu füllen. Der Pressrand ist dabei so gestaltet, dass er das Formnest nach außen abdichtet und den Rand der Einlegesohle auf eine Materialdicke von annähernd Null, nach außen hin auslaufend, verpresst.

Der Stützkern im Mittelbereich der Einlegesohle wird in einem weiteren, sich unmittelbar anschließenden Verfahrensschritt aufgebracht, indem ein thermoplastischer Kunststoff, typischerweise Polypropylen (PP) oder Polyethylen (PE) eingespritzt wird. Diese Kunststoffe besitzen im Vergleich mit dem vorerwähnten Kunststofflappen eine deutlich größere Härte und weisen insgesamt mechanische Eigenschaften auf, die die Anforderungen an die Biegesteifigkeit des Stützkerns erfüllen. Die Hinterfüllung der nach dem Pressen verbliebenen Hohlräume erfolgt mit den vorgenannten Materialien typischerweise bei einer Massetemperatur von 200°C bis 230°C und einem Spritzdruck im Bereich von 100 bar bis 120 bar, der so gewählt ist, dass er ein faltenfreies Anlegen des verbliebenen Kunststofflappens und dessen hinterlegten Gewebes oder Vlieses an der Formnestrückwand sicherstellt. Die im Spritzgießverfahren aufgebrachte Masse verbindet sich mit dem aufgeschmolzenen Material des Kunststofflappens zum festen Verbund der fertigen Schuheinlage.

Der Anguss kann vorzugsweise als Filmanguss an der Schmalseite der Einlegesohle im Bereich des Längsgewölbes ausgebildet sein. Bei einem Werkzeug für ein Einlegesohlenpaar erstreckt sich der Angusskanal dabei von der Trennebene der Werkzeughälften aus mittig zwischen beide Formnester und von dort nach beiden Seiten zum jeweiligen Formnest.

Das Einspritzen muss sich unmittelbar an den Pressvorgang anschließen, denn der zuvor verpresste Kunststoff darf zu diesem Zeitpunkt noch nicht erstarrt sein. Dabei hat sich überraschenderweise gezeigt, dass die Spritzgussmasse nicht mehr bis zum äußeren Rand der Einlegesohle vordringt sondern vor diesem Bereich dünn auslaufend erstarrt, so dass die Einlegesohle ringsum glatt in einen den Stützkern umgebenden Randbereich von mehreren Millimetern übergeht, der ausschließlich aus Material des Kunststofflappens besteht, dessen Materialstärke aufgrund des vorgenannten Pressvorgangs zum Rand hinauf annähernd Null abnimmt

Nach einer Abkühlphase wird das Werkzeug geöffnet und das im wesentlichen fertige Sohlenpaar entnommen bzw. automatisch ausgeworfen, als restliche Arbeitsgänge verbleiben lediglich noch das Abschneiden ggfs. überstehenden Kunststoffmaterials und das Abtrennen des Angusses.

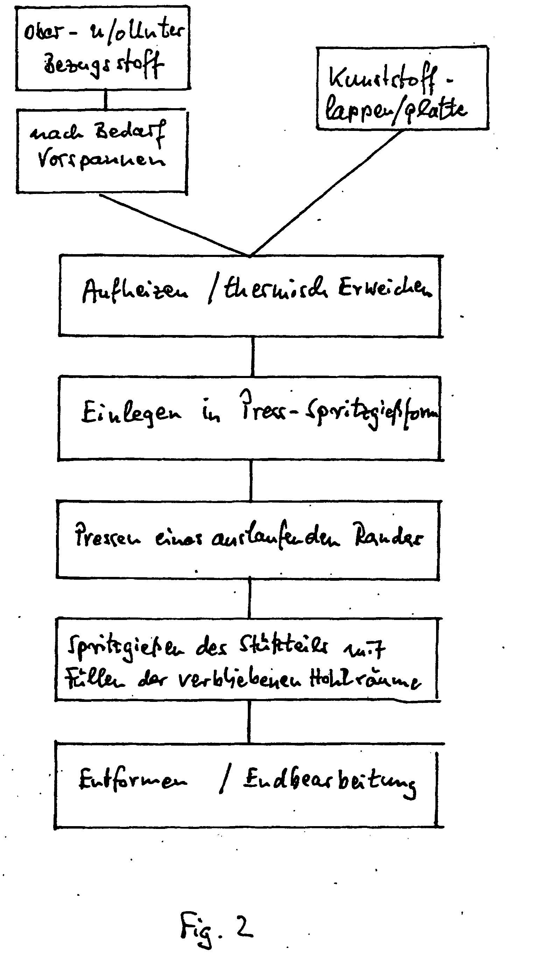

In einem weiteren Ausführungsbeispiel (Fig. 2) ist ein hautfreundlicher und rutschfester Bezug für die Oberseite der Einlegesohle vorgesehen. Hierzu wird das Bezugsmaterial, bspw. ein Vlies oder Gewebe, das an der Durchtrittsstelle der von der Spritzguss-Düse ausgehenden Angussstange eine Ausnehmung aufweist, passgenau mit dem mit einem Gewebe hinterlegten Kunststofflappen zusammengefügt. Je nach den elastischen Eigenschaften des Bezugsmaterials kann das Auflegen direkt oder mit einer aufgeprägten Vorspannung erfolgen. Danach wird beides zusammen aufgeheizt, bis der Kunststofflappen erweicht. Der Bezug kann ggfs. mit einem Heißkleber beschichtet sein, um einen dauerhaften Verbund zu gewährleisten. Die zusammengelegten Teile werden dann in die Press-Spritzgiessform eingelegt und in gleicher Weise wie zuvor zunächst dem Pressvorgang und anschließend dem Spritzgießverfahren unterworfen. Hierbei hat sich überraschenderweise gezeigt, dass sich auch in diesem Falle mit dem gleichen Press-Spritzgießwerkzeug ein ausgedünnter Randbereich erreichen lässt, und dass sich die Spritzguss-Masse dem Kunststofflappen, der mit dem hinterlegten Gewebe die Unterseite der Einlegesohle bildet, wie zuvor aufspritzen lässt. Die Kunststoffmasse füllt dabei den Raum zwischen dem Kunststofflappen und dem Oberbezug formschlüssig aus, indem sie diese gegen die ihnen jeweils zugewandten Formnestwandungen drückt.

In einer dritten Variante wird noch ein Unterbezug hinzugefügt. Das Verfahren läuft dann mit dem Dreierpaket in gleicher Weise wie zuvor beschrieben ab.

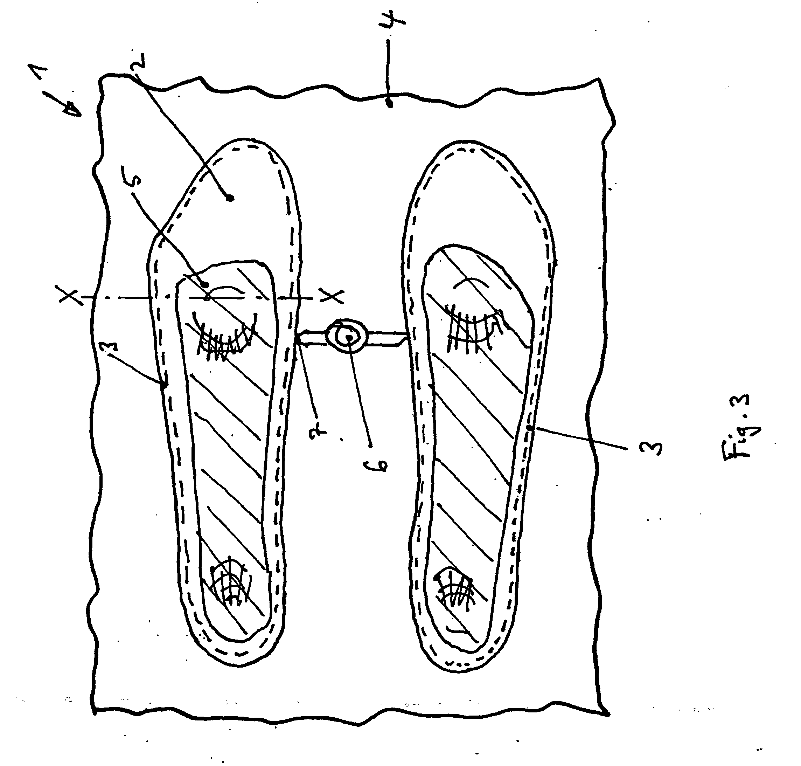

Fig. 3. zeigt schematisch ein nach dem erfindungsgemäßen Verfahren hergestelltes Schuheinlagenpaar (1) nach der Entnahme aus dem Werkzeug.

Bei jeder Einlegesohle (2) ist ein umlaufender Randbereich (3) von 1 mm bis 4 mm, vorzugsweise 2 mm bis 3 mm Breite gezeigt, der zum Rand der Einlegesohle hin auslaufend in eine mit Gewebe hinterlegte Kunststoffplatte (4) von etwa 1 mm Dicke eingepresst ist und nach außen an der hier noch auszuschneidenden Einlegesohle auf annähernd Null ausläuft. Annähernd Null soll bedeuten, dass die Ausgangs-Materialstärke von ca. 1 mm auf eine Dicke im Bereich von 1/10 mm oder weniger reduziert ist. Die Einlegesohle (2) weist in einem mittleren Teil eine den therapeutischen Vorgaben entsprechende Formgebung mit einem aus härterem Material bestehenden Stützteil (5) auf. Dieses kann im Prinzip an beliebiger Stelle angespritzt werden. Als besonders günstig hat sich aber eine Einspritzung von der Flachseite der Einlegesohle her über deren Rand erwiesen, wobei ein Teil des Angusskanals (6) parallel zur Trennebene des Werkzeugs verläuft und mit einem Filmanguss (7) in den Randbereich (3) der Einlegesohle (2) mündet. An dieser Stelle ist der umlaufende ausgedünnte Rand zwar insoweit unterbrochen, als sich hier die nach dem Einspritzen erstarrende Masse abzeichnet, allerdings ist der dadurch bedingt Materialauftrag bei entsprechender Angussgestaltung gering und für den Träger der Einlagen nicht bemerkbar, insbesondere wenn der Anguß im Bereich des Längsgewölbes angeordnet wird. Andererseits ist dieser sich am Rand der fertigen Sohle sich abzeichnende Anguss (7) ein unverwechselbares Charakteristikum der erfindungsgemäßen Schuheinlage.

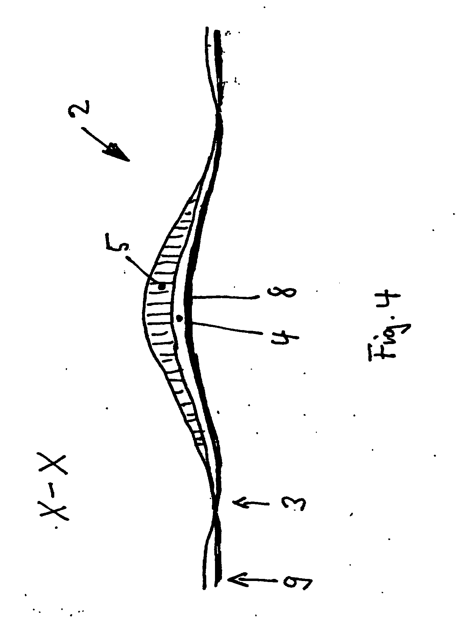

In der Fig. 4 ist zur Verdeutlichung ein Querschnitt durch eine der Einlegesohlen (2) längs der Linie X-X der Fig. 3 dargestellt. Der Stützkern (5) ist einer flexiblen Kunststoffplatte (4) aufgespritzt, die mit einem Vlies oder Gewebe (8) hinterlegt ist, welches die Unterseite der Einlegesohle (2) bildet. Der gepresste Randbereich (3) ist, wie vorstehend beschrieben, ausgedünnt, während außen im freigestellten Bereich des Werkzeugs überschüssiges Material (9) der flexiblen Kunststoffplatte (4) zurückbleibt.

## Patentansprüche

1. Verfahren zur Herstellung einer orthopädischen Schuheinlage, das folgende Verfahrensschritte umfasst:
a) Pressen eines thermisch erweichten Kunststofflappens oder einer thermisch erweichten Kunststoffplatte im Randbereich der Einlegesohle mittels einer Press-Spritzgießform, wobei das verpresste Material teilweise in das Formnest verdrängt wird;
b) anschließendes Aufbringen eines Stützteils durch Ausfüllen der verbliebenen Hohlräume der Form mit Kunststoff im Spritzgießverfahren zur Herstellung eines festen Verbunds der damit fertigen Schuheinlage, wobei das im Spritzguss verwendete Material im Vergleich zum Material des Kunststofflappens bzw. der Kunststoffplatte eine größere Härte besitzt.

2. Verfahren nach Anspruch 1, wobei der Kunststofflappen mit textilem Gewebe oder einem Vlies hinterlegt ist.

3. Verfahren nach einem der Ansprüche 1 oder 2, wobei das thermische Erweichen unter einem Heizstrahler erfolgt.

4. Verfahren nach einem der Ansprüche 1 oder 2 wobei das thermische Erweichen in einem Heizofen und/oder auf einer Heizplatte erfolgt.

5. Verfahren nach einem der Ansprüche 1 oder 2, wobei das thermische Erweichen in der Press-Spritzgießform erfolgt.

6. Verfahren nach einem der Ansprüche 1 bis 5, wobei das Press- und Spritzgießwerkzeug aus Aluminium oder Stahl besteht.

7. Verfahren nach einem der Ansprüche 1 bis 6, wobei das Formnest des Press- und Spritzgießwerkzeugs von einem erhöhten Pressrand umschlossen ist.

8. Verfahren nach Anspruch 7, wobei der Pressrand außerhalb der zu formenden Schuheinlage freigestellt ist.

9. Verfahren nach einem der Ansprüche 1 bis 8, wobei der Pressvorgang die Einlegesohle in einem Randbereich von 1 mm bis 4 mm, vorzugsweise von 2 mm bis 3 mm zum Rand hin, auf eine Materialdicke von annähernd Null auslaufend, presst.

10. Verfahren nach einem der Ansprüche 1 bis 9, wobei zusätzlich Ober- und/oder Untermaterial mittels eines thermoaktivierbaren Klebers auf die Einlegesohle aufgebracht wird.

11. Verfahren nach Anspruch 10, wobei das Ober- und/oder Untermaterial vor oder während des Verfahrensschritts des thermischen Erweichens auf den Kunststofflappen bzw. die flexible Kunststoffplatte aufgebracht wird.

12. Verfahren nach einem der Ansprüche 1 bis 11, wobei das Press- und Spritzgießwerkzeug mindestens zwei Formnester für mindestens ein Einlegesohlenpaar aufweist und der Anguss für den Spritzguss sich von einer mittleren Position zwischen rechter und linker Einlegesohle nach beiden Seiten zum jeweiligen Formnest hin erstreckt.

13. Orthopädische Schuheinlage, bestehend aus einem Kunststofflappen oder einer flexiblen Kunststoffplatte (4), die in einem Randbereich (3) entlang der Außenkontur der Einlegesohle (2) derart ausgedünnt ist, dass die Materialstärke im Randbereich der Einlegesohle (2) nach außen auf nahezu Null ausläuft, und weiter umfassend ein einen mittleren Bereich der Einlegesohle bildendes Stützteil (5) aus thermoplastischem Kunststoff, das dem Kunststofflappen bzw. der flexiblen Kunststoffplatte (4) aufgespritzt ist, wobei der Rand aus Material des Kunststofflappens bzw. der flexiblen Kunststoffplatte besteht und das aufgespritzte Material im Vergleich zum Material des Kunststofflappens bzw. der Kunststoffplatte eine größere Härte besitzt

14. Orthopädische Schuheinlage nach Anspruch 13, wobei ein Anguss (7) im Randbereich der Einlegesohle angeordnet ist.

15. Orthopädische Schuheinlage nach Anspruch 14, wobei der Anguss (7) als Filmanguss im Bereich des Längsgewölbes der Einlage angeordnet ist.

16. Orthopädische Schuheinlage nach einem der Ansprüche 13 bis 15, wobei der Randbereich (3) eine Breite von 1 mm bis 4 mm, vorzugsweise 2 mm bis 3 mm aufweist.

17. Orthopädische Schuheinlage nach einem der Ansprüche 13 bis 16, wobei die Einlegesohle zusätzlich mit einem Ober- und/oder Untermaterial bezogen ist.

18. Orthopädische Schuheinlage nach Anspruch 17, wobei das Ober- und/oder Untermaterial mittels Heißkleber mit der Einlegesohle verbunden ist.

## Claims

1. A method of manufacturing an orthopaedic shoe insert, comprising the following steps:
a) compressing a thermally softened plastic tab or a thermally softened plastic plate in the edge area of the shoe insert by means of a transfer mould, wherein the compressed material is partially displaced into the mould recess;
b) subsequently applying a support portion by filling the remaining cavities of the mould with plastic in an injection moulding process to create a durable bond of the thus finished shoe insert, wherein the material used for injection moulding has a greater hardness compared to the material of the plastic tab or the plastic plate.

2. The method according to claim 1, wherein the plastic tab is backed by a woven or non-woven fabric.

3. The method according to claim 1 or 2, wherein the thermal softening is carried out under a radiant heater.

4. The method according to claim 1 or 2, wherein the thermal softening is carried out in a heating oven and/or on a heating plate.

5. The method according to claim 1 or 2, wherein the thermal softening is carried out in the transfer mould.

6. The method according to any one of claims 1 to 5, wherein the transfer and injection moulding tool is of aluminium or steel.

7. The method according to any one of claims 1 to 6, wherein the mould recess of the transfer and injection moulding tool is surrounded by an elevated compression rim.

8. The method according to claim 7, wherein the compression rim is exposed outside of the shoe insert to be formed.

9. The method according to any one of claims 1 to 8, wherein the compression process compresses the shoe insert in an edge area of between 1 mm and 4 mm, preferably of between 2 mm and 3 mm towards the edge, to taper to a material thickness of approximately zero.

10. The method according to any one of claims 1 to 9, wherein additional upper and/or lower material is applied to the shoe insert by means of a thermally activated adhesive.

11. The method according to claim 10, wherein the upper and/or lower material is applied to the plastic tab or the flexible plastic plate before or during the process step of thermal softening.

12. The method according to any one of claims 1 to 11, wherein the transfer and injection moulding tool has at least two mould recesses for at least one shoe insert pair and the sprue for the injection moulding process extends from a central position between the right and left shoe inserts on either side to each mould recess.

13. An orthopaedic shoe insert, comprising a plastic tab or a flexible plastic plate (4) tapering toward an edge area (3) along the outer contour of the shoe insert (2) in such a way that the material thickness in the edge area of the shoe insert (2) is reduced to almost zero, and further comprising a support portion (5) forming a central area of the shoe insert of a thermoplastic which has been injection moulded onto the plastic tab or flexible plastic plate (4), wherein the edge is of the material of the plastic tab or the flexible plastic plate and the injection moulded material has a greater hardness compared to the material of the plastic tab or the plastic plate.

14. The orthopaedic shoe insert according to claim 13, wherein a sprue (7) is arranged in the edge area of the shoe insert.

15. The orthopaedic shoe insert according to claim 14, wherein said sprue (7) is arranged as a film sprue in the area of the longitudinal arch of the insert.

16. The orthopaedic shoe insert according to any one of claims 13 to 15, wherein the edge area (3) has a width of between 1 mm and 4 mm, preferably between 2 mm and 3 mm.

17. The orthopaedic shoe insert according to any one of claims 13 to 16, wherein the shoe insert is additionally covered by and upper and/or lower material.

18. The orthopaedic shoe insert according to claim 17, wherein the upper and/or lower material is bonded to the shoe insert by means of a hot-melt adhesive.

## Revendications

1. Procédé de fabrication d'une semelle de chaussure orthopédique qui comprend les étapes suivantes :
a) pressage d'une languette ou d'une plaque en matière plastique ramollie thermiquement au niveau du bord de la semelle à l'aide d'un moule de presse à injection, le matériau pressé étant partiellement déplacé vers l'intérieur du moule ;
b) application d'une pièce d'appui par le remplissage des espaces vides restant dans le moule avec de la matière plastique à l'aide d'un procédé de moulage par injection pour la création d'une liaison solide de la semelle ainsi fabriquée, le matériau utilisé lors du moulage par injection possédant une dureté supérieure au matériau de la languette ou de la plaque en matière plastique.

2. Procédé selon la revendication 1, la languette en matière plastique étant doublée d'un tissu ou d'un voile de carde.

3. Procédé selon l'une des revendications 1 ou 2, le ramollissement thermique étant effectué sous un radiateur.

4. Procédé selon l'une des revendications 1 ou 2, le ramollissement thermique étant effectué dans un four de chauffage et/ou sur une plaque de chauffage.

5. Procédé selon l'une des revendications 1 ou 2, le ramollissement thermique étant effectué dans le moule de la presse à injection.

6. Procédé selon l'une des revendications 1 à 5, l'outillage de pressage et de moulage par injection étant constitué d'aluminium ou d'acier.

7. Procédé selon l'une des revendications 1 à 6, l'intérieur du moule de l'outillage de pressage et de moulage par injection étant entouré d'un bord de pressage surélevé.

8. Procédé selon la revendication 7, le bord de pressage étant libre à l'extérieur de la semelle à façonner.

9. Procédé selon l'une des revendications 1 à 8, le processus de pressage pressant la semelle sur une partie de 1 mm à 4 mm, de préférence de 2 mm à 3 mm vers le bord, avec une épaisseur de matériau presque nulle.

10. Procédé selon l'une des revendications 1 à 9, le matériau supérieur et/ou le matériau inférieur étant appliqués à l'aide d'une colle thermo-activée sur la semelle.

11. Procédé selon la revendication 10, le matériau supérieur et/ou le matériau inférieur étant appliqués avant ou pendant l'étape de ramollissement thermique sur la languette ou sur la plaque en matière plastique flexible.

12. Procédé selon l'une des revendications 1 à 11, l'outillage de pressage et de moulage par injection comprenant au moins deux formes de moulage pour au moins une paire de semelles et le culot d'injection pour le moulage par injection s'étendant d'une position centrale entre la semelle droite et la semelle gauche des deux côtés vers le moule correspondant.

13. Semelle de chaussure orthopédique constituée d'une languette en matière plastique ou d'une plaque en matière plastique flexible (4) amincie au niveau d'un bord (3) le long du contour externe de la semelle (2) de telle sorte que l'épaisseur du matériau au niveau du bord de la semelle (2) tende presque vers zéro en direction de l'extérieur, et comprenant en outre, une pièce d'appui (5) formant une partie centrale de la semelle, constituée de matière thermoplastique et qui est injectée sur la languette en matière plastique ou sur la plaque en matière plastique flexible (4), le bord étant constitué du matériau de la languette en matière plastique ou de la plaque en matière plastique flexible et le matériau injecté possédant une dureté supérieure à celle du matériau de la languette en matière plastique ou de la plaque en matière plastique.

14. Semelle de chaussure orthopédique selon la revendication 13, un culot d'injection (7) se trouvant au niveau du bord de la semelle.

15. Semelle de chaussure orthopédique selon la revendication 14, le culot d'injection (7) étant disposé au niveau de la voûte longitudinale de la semelle sous la forme d'un film.

16. Semelle de chaussure orthopédique selon l'une des revendications 13 à 15, le bord (3) présentant une largeur de 1 mm à 4 mm, de préférence de 2 mm à 3 mm.

17. Semelle de chaussure orthopédique selon l'une des revendications 13 à 16, la semelle étant en outre revêtue d'un matériau supérieur et/ou d'un matériau inférieur.

18. Semelle de chaussure orthopédique selon la revendication 17, le matériau supérieur et/ou le matériau inférieur étant reliés à la semelle à l'aide d'une colle à chaud.
